# EUROPEAN PATENT APPLICATION

(11) **EP 2 846 296 A1**
(43) Date of publication of application: **11.03.2015**
(21) Application number: 14184135.3
(22) Date of filing: 09.09.2014
(51) Int. Cl.: G06Q 10/00

(54) **Method, apparatus and terminal device for displaying messages**

(30) Priority: 10.09.2013 CN 201310409726
(71) Applicant: Xiaomi Inc., Beijing 100085 (CN)
(72) Inventor: Liu, Daokuan, Haidian District Beijing (CN); Zhang, Xu, Haidian District, Beijing (CN); Wang, Bin, Haidian District, Beijing (CN); Weng, Haibin, Haidian District, Beijing (CN)
(74) Representative: Hanna, Peter William Derek

(57) **Abstract**

The present disclosure relates to a method, an apparatus and a terminal device for displaying messages. The method includes the following steps: receiving (S101) a message marking instruction directed to a message in a message display window; processing (S102) the message according to the message marking instruction; and updating (S103) the processed message to the message display window. In embodiments of the present disclosure, the message in the message display window may be marked, and many more functions may be provided for the user by allowing the message to be marked. For example, according to an embodiment of the present disclosure, when the user has sent out an erroneous message, he does not need to explain the erroneous message, but only needs to mark the erroneous message, which improves the speed and efficiency for communication between the users.

## Description

This application claims the benefit of priority from the prior Chinese Patent Application No. 201310409726.6, filed on September, 10, 2013.

### TECHNICAL FIELD

The present disclosure relates to the field of computer and communication technology, and more particularly to a method, an apparatus and a terminal device for displaying messages.

### BACKGROUND

With the development of communication and computer technology, communication functions of Internet products and software products are becoming more and more perfect, which enriches the way that people communicate. For example, the emergence of instant communication tools brings about significant convenience for people to communicate. When using an instant communication tool, the user may communicate with a contact person through messages in form of texts, audios and even videos. Generally, conversations (including received messages and messages that are sent out) with each of the contacts will be displayed in a message display window for the user to browse.

Currently, when a user using an instant messaging tool having a conversation with a contact person finds out that there is an error in a message that has been sent out previously, he will send another message to explain the error in the previous message, and then edit and send out a message with correct content. Meanwhile, the receiving party will receive an erroneous message, an explanation message and a correct message, which means the user of the receiving party has to read and analyse the above three received messages to understand what the sending party means. Therefore, the existing method for displaying messages is complex to be operate, and inconvenient for the users of the receiving party and the sending party to conduct a fast and efficient communication.

### SUMMARY

In view of the above, the object of the present disclosure is to provide a method, an apparatus and a terminal device for displaying messages, in accordance with claims which follow, that is capable of simplifying user operations and improving the efficiency and speed of the communication between users.

According to a first aspect of the embodiments of the present disclosure, there is provided a computer-implemented method for displaying messages. The method includes the following steps:
receiving a message marking instruction directed to a message in a message display window;
processing the message according to the message marking instruction;
updating the processed message to the message display window.

The advantageous effects of the technical solution according to the embodiments of the present disclosure may include: in the embodiment of the present disclosure, by processing the message in the message display window according to the message marking instruction and updating the processed message to the message display window, the message in the message display window may be marked, and many more functions may be provided for the user by allowing the message to be marked. For example, through the method according to the embodiment of the present disclosure, when the user has sent out an erroneous message, he does not need to explain the erroneous message, but only needs to mark the erroneous message, which improves the speed and efficiency for communication between the users.

In an embodiment, the message marking instruction includes: a message deleting instruction and a message referring instruction.

In an embodiment, the message deleting instruction includes: a whole message deleting instruction and a partial message deleting instruction.

In an embodiment, in the case that the message marking instruction is the whole message deleting instruction, the processing the message according to the message marking instruction includes: deleting the message; or adding a deleting line across the message;
in the case that the message marking instruction is a partial message deleting instruction, the processing the message according to the message marking instruction includes: deleting selected characters in the message; or adding a deleting line across the selected characters in the message.

In the embodiment of the present disclosure, by adding a deleting line on the message in the message display window which indicates that the message is erroneous, the erroneous message may be shown by the deleting line. The manner of displaying messages is made simple and easy for the user to understand the meaning of the deleting line. Adding a deleting line on the erroneous message may save an effort of the user to explain the error, and thus the operation for the user is simplified. In the embodiment of the present disclosure, by deleting the whole message or part of the message, the erroneous message may be deleted promptly, so the interface area of the message display window may be saved to facilitate user operation and improve user experience.

In an embodiment, the receiving a message marking instruction directed to a message in a message display window includes:
detecting a preset operation directed to the message in the message display window;
determining the message marking instruction that corresponds to the preset operation according to the detected preset operation directed to the message in the message display window.

In the embodiment of the present disclosure, by detecting the preset operation performed on the message in the message display window, the message mark instructions corresponding to the preset operation may be determined. The method is easy to be implemented and convenient for the user to operate, and the process of communication between users is simplified to improve user experience.

In an embodiment, in the case that the message marking instruction is the message deleting instruction, and the message is a message sent from a local party, the method further includes: sending the message marking instruction directed to the message to the receiving party of the message;
in the case that the message marking instruction is the message referring instruction, the method further includes: sending the message marking instruction directed to the message to the receiving party and/or sending party of the message except for the local party.

In the embodiment of the present disclosure, by sending the message marking instruction to the message receiving parties of the message, marks on the message may be easily upgraded and displayed simultaneously in the message display windows of the sending party and the receiving parties of the message, which facilitates a fast and efficient communication for the users.

In an embodiment, in the case that the message marking instruction is the message referring instruction, the processing the message according to the message marking instruction includes:
adding a reference mark between the message and the message that refers to the former message.

In the embodiment of the present disclosure, by displaying a reference mark between the messages, it is convenient for the user to understand the content of the message, and when the users are discussing several different subject matters at the same time, the correlation between the messages may be found out by the users through the reference mark. So it is easy to understand the content of the message, and the communication between the users is made fast and convenient.

In an embodiment, an edit key is provided at a start point or a finish point of the reference mark, the edit key being configured to modify or delete the reference mark.

In the embodiment of the present disclosure, by allowing an edit operation to the reference mark, it is convenient for the user to correlate the messages through the reference mark.

In an embodiment, in the case that the message is not a message sent form the local party, and the message marking instruction is the message referring instruction, the method further includes:
sending prompt information to the sending party of the message informing that the message has been referred.

In the embodiment of the present disclosure, by informing the sending party of the message that the message has been cited, the user may communicate fast and promptly, which improves user experience.

According to a second aspect of the embodiments of the present disclosure, there is provided an apparatus for displaying messages. The apparatus includes:
a receiving module, configured to receive a message marking instruction directed to a message in a message display window;
a processing module, configured to process the message according to the message marking instruction;
an updating module, configured to update the processed message to the message display window.

In an embodiment, the message marking instruction includes a message deleting instruction and a message referring instruction.

In an embodiment, the message deleting instruction includes: a whole message deleting instruction and a partial message deleting instruction.

In an embodiment, the processing module includes:
a first processing unit, in the case that the message marking instruction is the whole message deleting instruction, the first processing unit is configured to delete the message or to add a deleting line across the message;
a second processing unit, in the case that the message marking instruction is the partial message deleting instruction, the second processing unit is configured to delete selected characters in the message or to add a deleting line across the selected characters in the message.

In an embodiment, the receiving module includes:
a detection unit, configured to detect a preset operation directed to the message in the message display window;
a determination unit, configured to determine the message marking instruction that corresponds to the preset operation according to the detected preset operation directed to the message in the message display window.

In an embodiment, the apparatus includes:
a first sending module, in the case that the message marking instruction is the message deleting instruction and the message is a message sent from a local party, the first sending module is configured to send the message marking instruction directed to the message to the receiving party of the message;
a second sending module, in the case that the message marking instruction is the message referring instruction, the second sending module is configured to send the message marking instruction directed to the message.

In an embodiment, the processing module includes:
a third processing unit, in the case that the message marking instruction is the message referring instruction, the third processing unit is configured to add a reference mark between the message and the message that refers to the former message.

In an embodiment, an edit key is provided at a start point or a finish point of the reference mark, the edit key being configured to modify or delete the reference mark.

In an embodiment, the apparatus further includes:
a third sending module, in the case that the message is not a message sent form the local party and the message marking instruction is the message referring instruction, the third sending module is configured to send prompt information to the sending party of the message informing that the message has been referred.

According to a third aspect of the embodiments of the present disclosure, there is provided a terminal device, which includes a memory and one or more programs stored in the memory, and the terminal device is configured to execute the one or more programs by one or more processors, the one or more programs containing instructions to perform the following operations:
receiving a message marking instruction directed to a message in a message display window;
processing the message according to the message marking instruction;
updating the processed message to the message display window.

According to a fourth aspect of the embodiments of the present disclosure, there is provided a program product having stored therein instructions that, when executed by one or more processors of a terminal, causes the terminal to perform:
receiving a message marking instruction directed to a message in a message display window;
processing the message according to the message marking instruction; and
updating the processed message to the message display window.

Through the method, apparatus and terminal device for displaying messages according to the embodiment of the present disclosure, by adding a deleting line on the message in the message display window which indicates that the message is erroneous, the erroneous message may be shown by the deleting line. The manner of displaying messages is made simple and easy for the user to understand the meaning of the deleting line. Adding a deleting line on the erroneous message may save an effort of the user to explain the error, and thus the operation for the user is simplified. In the embodiment of the present disclosure, by deleting the whole message or part of the message, the erroneous message may be deleted promptly, so the interface area of the message display window may be saved to facilitate the user operation and improve user experience.

Other characteristics and advantages of the present disclosure will be set forth in the following description, and will in part become apparent from the description, or may be appreciated through the practice of the present disclosure. The objects and other advantages of the present disclosure may be realized and obtained through the structures particularly pointed out in the written description, the claims and the accompanying drawings.

Hereinafter, the technical solutions of the embodiments of the present disclosure will be described in further detail with reference to the accompanying drawings and the embodiments.

It should be appreciated that, the above general description and the detailed description below are merely exemplary. The technical solution of the present disclosure will be described in a further detail with reference to accompanying drawings and embodiments.

### BRIEF DESCRIPTION OF THE DRAWINGS

The accompany drawings which are incorporated in and constitute a part of the description, illustrate embodiments according to the present disclosure, and serve to explain the principle of the present disclosure together with the description.

The accompanying drawings which constitute a part of the description and serve to explain the present disclosure together with the embodiments of the present disclosure, are provided for a better understanding of the present disclosure. In the drawings:
Fig.1 is a flowchart showing the main processes of a method for displaying messages according to an exemplary embodiment;
Fig.2 is a detailed flowchart showing a process for determining a message marking instruction based on a preset operation according to an exemplary embodiment;
Fig.3 is a detailed flowchart showing a process for deciding whether the message marking instruction is received based on the preset operation and displaying the message according to an exemplary embodiment;
Fig.4 is a detailed flowchart showing a process for displaying a deleting line across the message based on a preset gesture according to an exemplary embodiment;
Fig.5 is a resulting view showing a message is displayed in a message display window according to an exemplary embodiment;
Fig.6 is a resulting view showing a preset gesture is performed on the whole message according to an exemplary embodiment;
Fig.7 is a resulting view showing a preset gesture is performed on part of the message according to an exemplary embodiment;
Fig.8 is a resulting view showing the message is updated and displayed after the preset gesture is performed on the whole message according to an exemplary embodiment;
Fig.9 is a resulting view showing the message is updated and displayed after the preset gesture is performed on part of the message according to an exemplary embodiment;
Fig.10 is a detailed flowchart showing a process for displaying a message after a deleting process is performed on the message according to an exemplary embodiment;
Fig.11 is a resulting view showing the whole message is deleted according to an exemplary embodiment;
Fig.12 is a resulting view showing part of the message is deleted according to an exemplary embodiment;
Fig.13 is a detailed flowchart showing a process for displaying a message with a reference mark according to an exemplary embodiment;
Fig.14 is a resulting view showing a message display window before a message marking instruction is received according to an exemplary embodiment;
Fig.15 is a resulting view showing a first message display window in which a reference mark is displayed according to an exemplary embodiment;
Fig.16 is a resulting view showing a sliding gesture is performed between messages that have been sent according to an exemplary embodiment;
Fig.17 is a resulting view showing a reference mark is displayed after a sliding gesture is performed between messages that have been sent according to an exemplary embodiment;
Fig.18 is a detailed flowchart showing a process for editing or deleting on a reference mark according to an exemplary embodiment;
Fig.19 is a detailed flowchart showing a process for sending prompt information to sending party according to an exemplary embodiment;
Fig.20 is a detailed flowchart showing a process for synchronizing the message displayed in a mobile phone A and a mobile phone B according to an exemplary embodiment;
Fig.21 is a resulting view showing a message is displayed after the mobile phone A performs a whole message deleting instruction according to an exemplary embodiment;
Fig.22 is a resulting view showing a message is displayed after the mobile phone B performs a whole message deleting instruction according to an exemplary embodiment;
Fig.23 is a schematic block diagram showing the main structure of an apparatus for displaying messages according to an exemplary embodiment;
Fig.24 is a detailed schematic block diagram showing a first processing module according to an exemplary embodiment;
Fig.25 is a detailed schematic block diagram showing a receiving module according to an exemplary embodiment;
Fig.26 is a detailed schematic block diagram showing a first apparatus for displaying messages according to an exemplary embodiment;
Fig.27 is a detailed schematic block diagram showing a second processing module according to an exemplary embodiment;
Fig.28 is a detailed schematic block diagram showing a second apparatus for displaying messages according to an exemplary embodiment;
Fig.29 is a schematic block diagram showing an apparatus for displaying messages including all the modules according to an exemplary embodiment;
Fig.30 is a schematic block diagram showing a terminal device according to an exemplary embodiment.

### DETAILED DESCRIPTION

The embodiments of the present disclosure will be described with reference to the accompanying drawings.

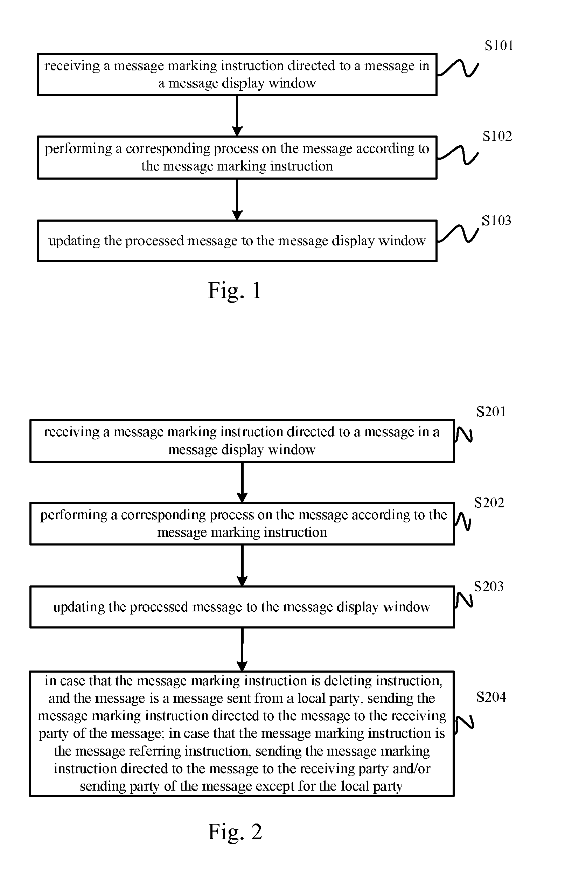

A method for displaying messages provided by the embodiments of the present disclosure may be implemented in terminal devices with communication function, such as a mobile phone, a computer, a tablet computer, etc. Referring to Fig.1, the main processes of the method for displaying messages according to the embodiments of the present disclosure include the following steps.

In step S101, a message marking instruction directed to a message in a message display window is received.

In an embodiment, the message marking instruction includes a message deleting instruction and a message referring instruction.

In an embodiment, the message deleting instruction includes: a whole message deleting instruction and a partial message deleting instruction.

In the embodiment of the present disclosure, whether the message marking instruction is received may be decided by detecting a preset operation performed on the message in the message display window. Specifically, when the preset operation performed on the message in the message display window is detected, the preset operation is determined as the received message marking instruction directed to the message in the message display window, and the next step is performed according to the instruction; or, the next step is performed according to the received message marking instruction sent by other device. In short, in either case, both of the device of the sending party and the device of the receiving party may perform the next step according to the received message marking instruction directed to the message in the message display window.

In step S102, a corresponding process is performed on the message according to the message marking instruction.

Specifically, the corresponding process according to the message deleting instruction includes: deleting the whole message or part of the message or marking a deleting line across the message; the corresponding process according to the message referring instruction includes: printing a reference mark between the message and a new message.

In step S103, the processed message is updated to the message display window.

In the embodiment of the present disclosure, by performing the corresponding process on the message in the message display window according to the message marking instruction and updating the processed message to the message display window, the message in the message display window may be marked, and many more functions may be provided for the user by allowing the message to be marked. For example, through the method according to the embodiment of the present disclosure, when the user has sent out an erroneous message, he does not need to explain the erroneous message, but only needs to mark the erroneous message, which improves the speed and efficiency for the communication between users.

In the case that the embodiment of the present disclosure is applied to a terminal which firstly performs the preset operations on a certain message, the message marking instruction may be further sent to the sending party and/or receiving party of the message, so as to perform the message marking instruction in the message display windows of the both parties in the meantime such that the contents may be displayed synchronously in the message display windows of the both parties. Referring to Fig.2, the detailed processes include the following steps.

In step S201, a message marking instruction directed to a message in a message display window is received.

In step S202, a corresponding process is performed on the message according to the message marking instruction.

In step S203, the processed message is updated to the message display window.

In step S204, in the case that the message marking instruction is the message deleting instruction, and the message is a message sent from a local party, the message marking instruction directed to the message is sent to the receiving party of the message; in the case that the message marking instruction is the message referring instruction, the message marking instruction directed to the message is sent to the receiving party and/or sending party of the message except for the local party.

Specifically, if the sending party of the message initiates the message referring instruction directed to the message, the message referring instruction is sent to all the receiving parties of the message; if the receiving party of the message initiates the message referring instruction directed to the message, the message referring instruction is sent to all the receiving parties of the message except for the local party (a message may have a plurality of receiving parties for example in the case of a group chat) and to the sending party of the message.

In the embodiment of the present disclosure, by sending the message marking instruction to the message receiving parties of the message, marks on the message may be easily upgraded and displayed simultaneously in the message display windows of the sending party and the receiving parties of the message, which facilitates a fast and efficient communication for users.

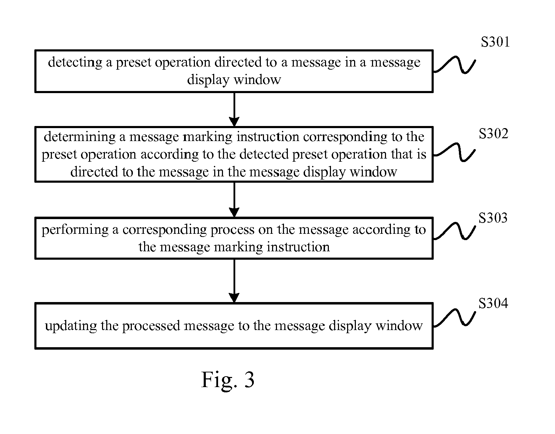

In an embodiment of the present disclosure, whether the message marking instruction is received may be decided by detecting a preset operation performed on the message in the message display window. Referring to Fig.3, the detailed processes include the following steps.

In step S301, a preset operation directed to a message in a message display window is detected.

In an embodiment, the preset operation may be, for example, a preset gesture operation performed, for example, on the message: rightward sliding with one finger, leftward sliding with several fingers, rightward sliding with several fingers, upward sliding with one finger, downward sliding with one finger, upward sliding with several fingers, downward sliding with several fingers, click with one finger, click with several fingers, press with one finger, and/or press with several fingers, etc. In addition, other operations performed on the message may be detected, for example, any gesture that may be sensed by sensors without necessity to contact the touch screen; long press on the left key to drag, a single click, a double click, etc., that may be performed on the message by a mouse.

In step S302, a message marking instruction corresponding to the preset operation is determined according to the detected preset operation that is directed to the message in the message display window.

In an embodiment, the message marking instruction corresponding to the preset operation may be determined by looking up a table. The corresponding relationship between the preset gesture operations and the message marking instructions is shown in Table 1, in which one message marking instruction may corresponds to a plurality of preset operations to improve the convenience of the operation.

The corresponding relationship between the preset mouse operations and the message marking instructions is shown in Table 2, in which one message marking instruction may corresponds to a plurality of preset mouse operations to improve the convenience of the operation.

Table 1 and Table 2 serve merely to illustrate the corresponding relationship between the preset operations and the message marking instructions by examples, and not to limit the embodiment of the present disclosure.

**Table 1**

| | |
|---|---|
| preset gesture operations | message marking instructions |
| rightward sliding with one finger | message deleting instruction |
| leftward sliding with one finger | message deleting instruction |
| click with one finger | message referring instruction |
| upward sliding with one finger | message referring instruction |
| downward sliding with one finger | message referring instruction |

**Table 2**

| | |
|---|---|
| preset mouse operations | message marking instructions |
| leftward dragging with the mouse | message deleting instruction |
| rightward dragging with the mouse | message deleting instruction |
| upward dragging with the mouse | message referring instruction |
| downward dragging with the mouse | message referring instruction |

In step S303, a corresponding process is performed on the message according to the message marking instruction.

In this embodiment, for example, when a rightward sliding gesture directed to a certain message is detected, it is determined that a message deleting instruction is performed on the message, the corresponding process is for example, adding a deleting line across the message.

In step S304, the processed message is updated to the message display window.

In the embodiment of the present disclosure, by detecting the preset operation performed on the message in the message display window, the message marking instructions corresponding to the preset operation may be determined. The method is easy to be implemented and convenient for the user to operate, and the process of communication between users is simplified to improve user experience.

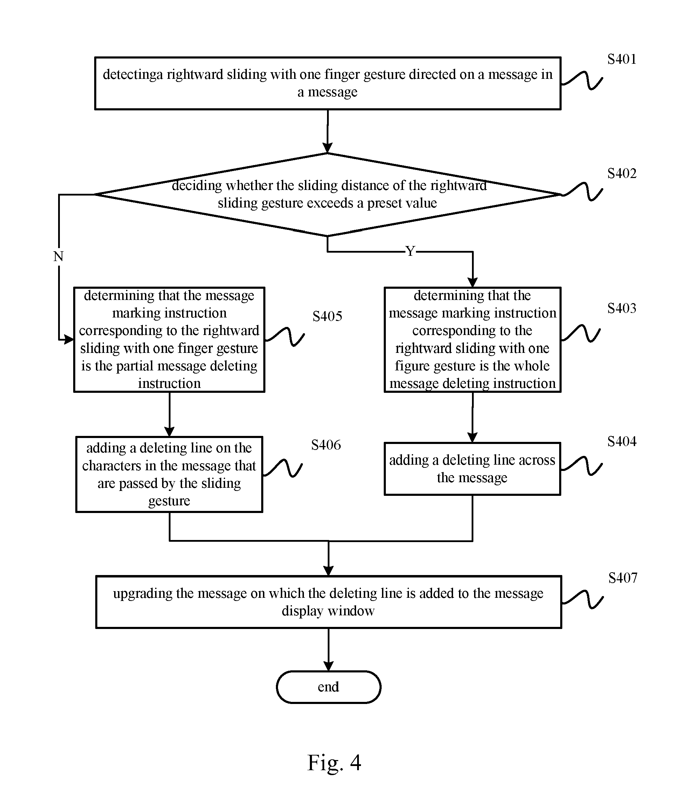

In an embodiment of the present disclosure, the message deleting instruction may further include a whole message deleting instruction and a partial message deleting instruction. Hereinafter, the method for displaying messages according to the embodiment of the present disclosure will be illustrated in detail by taking the case that a rightward sliding with one finger operation performed on a message is detected as an example. Referring to Fig.4, the method includes the following steps.

In step S401, a rightward sliding with one finger gesture directed on a message in a message display window is detected.

In an embodiment, in this step, the track of the rightward sliding with one finger gesture operation is displayed to facilitate the user to check.

In step S402, it is decided whether the sliding distance of the rightward sliding gesture exceeds a preset value, if it does, perform step S403; and if it does not, perform step S405.

In this step, it is decided whether the rightward sliding gesture is directed to the whole message or a part of the message according to the sliding distance.

More precisely, in other embodiment of the present disclosure, it may be decided whether the rightward sliding with one finger gesture is directed to the whole message or a part of the message by determining the start point and finish point of the rightward sliding with one finger gesture. In the case that the start point and finish point are located at the head position and tail position of the message respectively, the rightward sliding gesture corresponds to the whole message deleting instruction; if the starting point is not located at the head position of the message, or the finish point is not located at the tail position of the message, the rightward sliding gesture corresponds to the partial message deleting instruction.

In step S403, if it is determined that the message marking instruction corresponding to the rightward sliding with one finger gesture is the whole message deleting instruction, and then step S404 is performed.

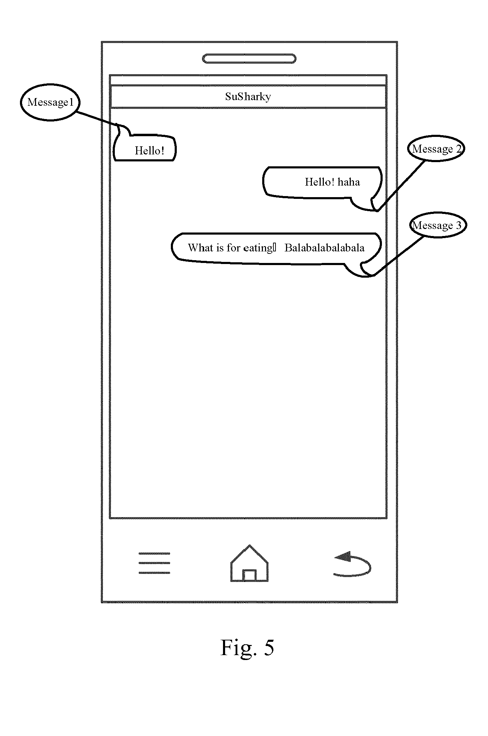

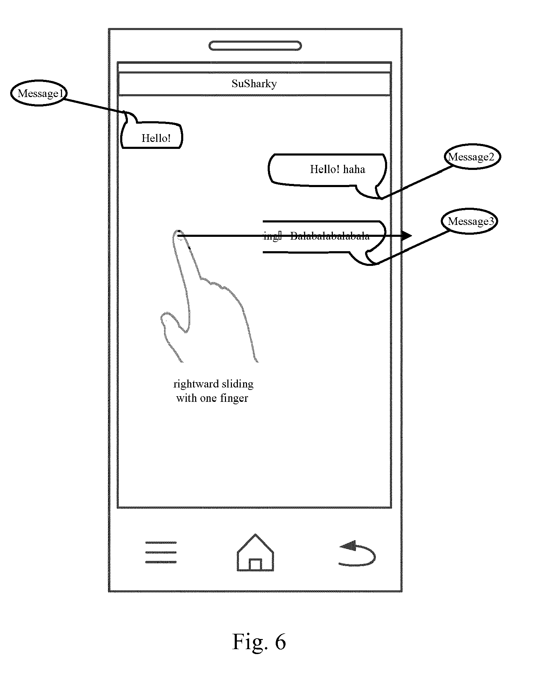

For example, as shown in Fig.5, which is a schematic view showing that there are 3 pieces of messages in the message display window that are respectively message 1, 2, and 3. Fig.6 is a schematic view showing that a rightward sliding with one finger gesture is performed on the whole piece of the message 3, in which the rightward sliding with one finger gesture is performed along the direction shown by the arrow in the drawing, and corresponds the whole message deleting instruction.

In step S404, a deleting line is added across the message, and then step S406 is performed.

In step S405, it is determined that the message marking instruction corresponding to the rightward sliding with one finger gesture is the partial message deleting instruction, and then step S406 is performed.

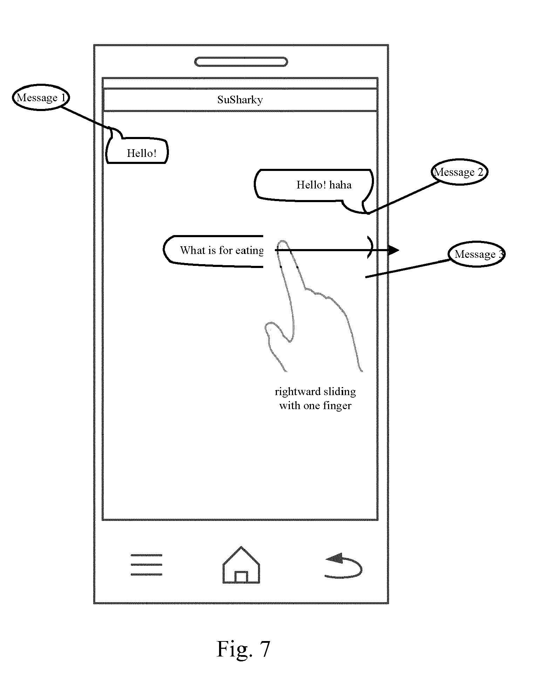

For example, as shown in Fig.7 which shows a part of the message 3 shown in Fig.5, that is a schematic view showing that a rightward sliding with one finger gesture is performed on some characters, so the rightward sliding with one finger gesture corresponds to the partial message deleting instruction.

In step S406, a deleting line is added on the characters in the message that are passed by the sliding gesture, and then step S407 is performed.

In step S407, the message on which the deleting line is added is upgraded to the message display window.

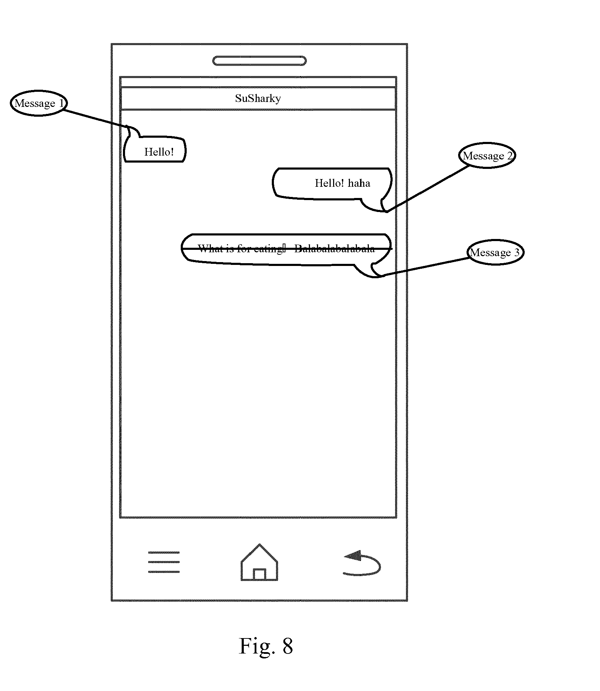

Fig.8 corresponds to Fig.6, which is a schematic view showing that a deleting line is added on the whole message 3 after the rightward sliding with one finger gesture is performed on the whole message 3.

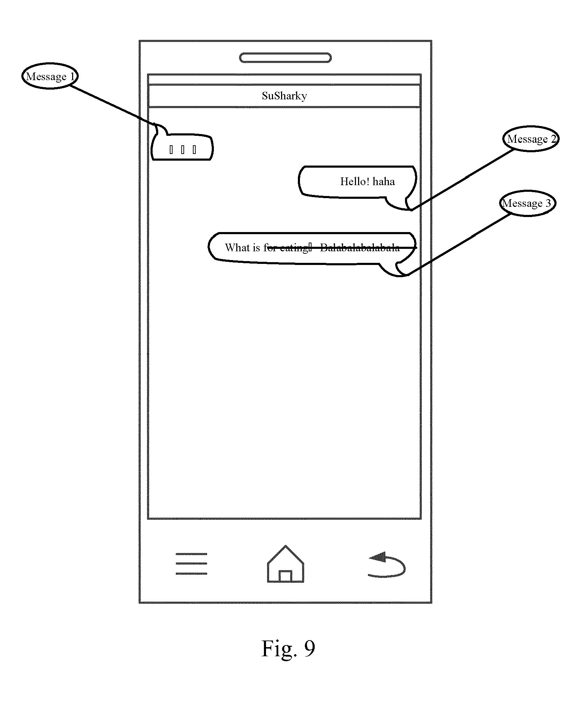

Fig.9 corresponds to Fig.7, which is a schematic view showing that a deleting line is added on part of the message 3, i.e. on the selected characters after the rightward sliding with one finger gesture is performed on part of the message 3.

In the embodiment of the present disclosure, by adding a deleting line on the message in the message display window which indicates that the message is erroneous, the erroneous message may be shown by the deleting line. The manner of displaying messages is made simple and easy for the user to understand the meaning of the deleting line. Adding a deleting line on the erroneous message may save an effort of the user to explain the error, and thus the operation for the user is simplified.

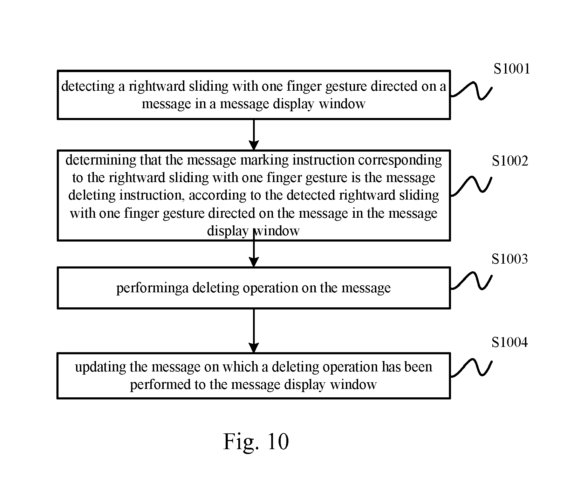

In an embodiment of the present disclosure, when the message deleting instruction is received, a deleting operation may be also performed on the message. Referring to Fig. 10, the detailed process of deleting the message to display the message includes the following steps.

In step S1001, a rightward sliding with one finger gesture directed on a message in a message display window is detected.

In step S1002, it is determined that the message marking instruction corresponding to the rightward sliding with one finger gesture is the message deleting instruction, according to the detected rightward sliding with one finger gesture directed on the message in the message display window.

In an embodiment, the message deleting instruction includes a whole message deleting instruction and a partial message deleting instruction. Specifically, when the whole message deleting instruction is received, the whole message is deleted; and when the partial message deleting instruction is received, a selected part of the message is deleted.

In an embodiment, as shown in Fig.6, the rightward sliding with one finger gesture performed on the whole message corresponds to the whole message deleting instruction.

In an embodiment, as shown in Fig.7, the rightward sliding with one finger gesture performed on part of the message corresponds to the partial message deleting instruction.

In step S1003, a deleting operation is performed on the message.

In step S1004, the message on which a deleting operation has been performed is updated to the message display window.

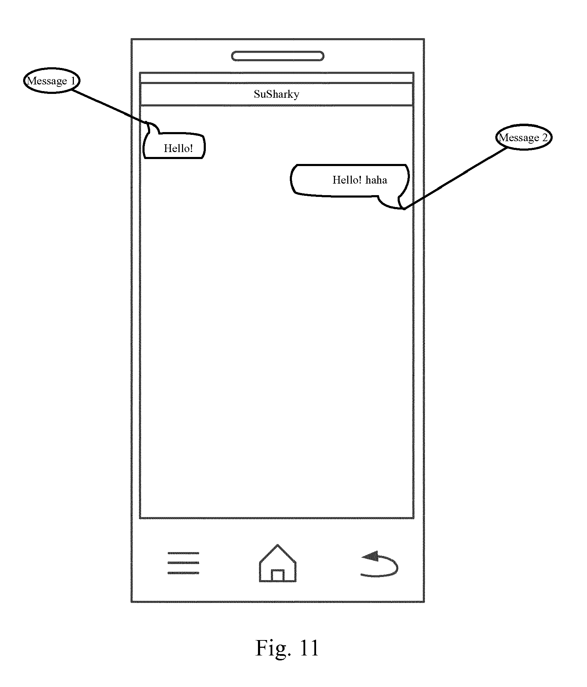

Fig.11 corresponds to Fig.6, which is a schematic view showing that after the rightward sliding with one finger gesture performed on the whole message 3 is detected, the whole message 3 is deleted and then upgraded to the message display window, with the deleted whole message 3 being not displayed in the message display window shown in Fig.11.

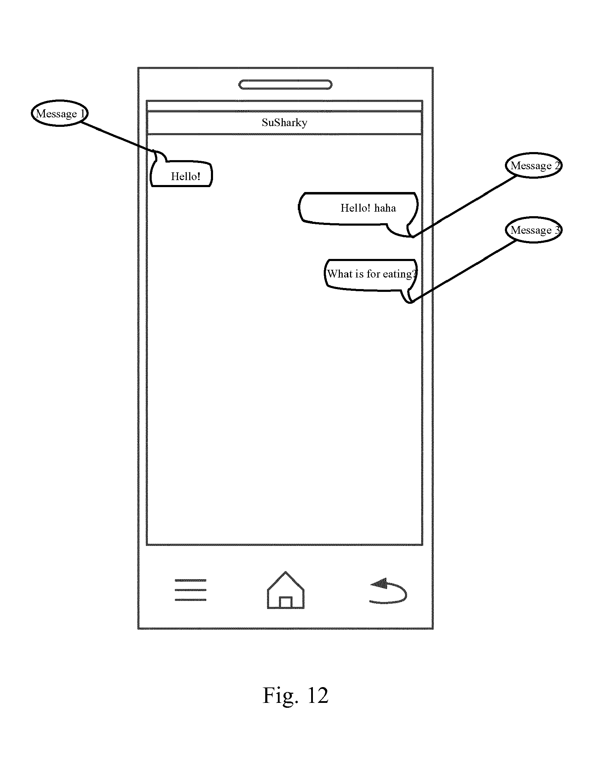

Fig.12 corresponds to Fig.7, which is a schematic view showing that after the rightward sliding with one finger gesture performed on part of the message 3 is detected, the selected characters of the message 3 are deleted and then upgraded to the message display window, with the selected characters of the message 3 being not displayed in the message display window shown, and the undeleted part of the message 3 being displayed in the message display window shown in Fig. 12.

In the embodiment of the present disclosure, by deleting the whole message or part of the message, the erroneous message may be deleted promptly, so the interface area of the message display window may be saved to facilitate the user operation and improve user experience.

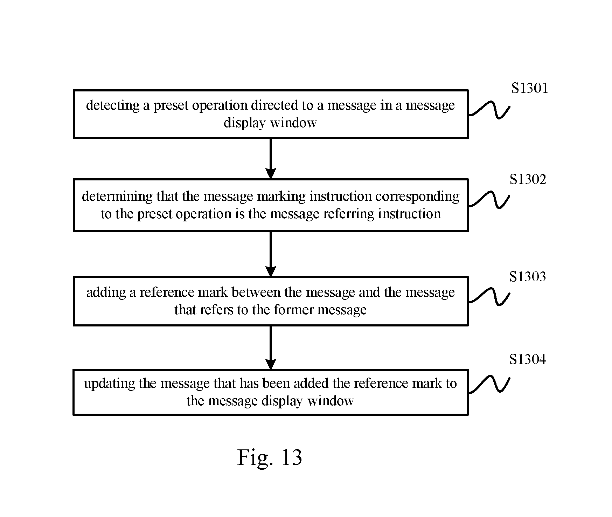

In an embodiment of the present disclosure, a reference mark may also be displayed by performing the message referring instruction, to display the correlation between messages in the message display window through the reference mark, for the user to understand the content of the message. As shown in Fig.13, take the case that the message marking instruction is received as an example, the method for displaying messages according to the embodiment of the present disclosure will be described, and the detailed processes include the following steps.

In step S1301, a preset operation directed to a message in a message display window is detected.

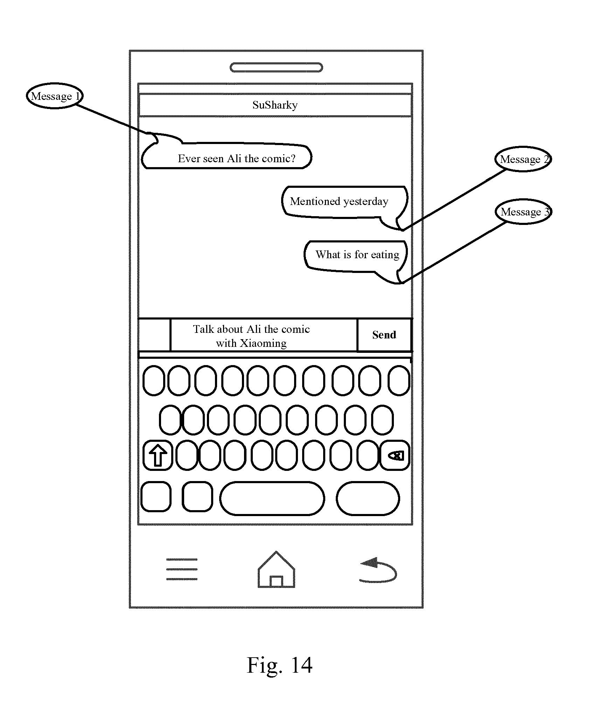

The preset operation is, for example, a long press on the message, as shown in Fig.14. The message display window displayed on a touch screen of a mobile phone is shown in Fig.14, in which there are 3 pieces of messages (message 1, 2 and 3 respectively) and a new message to be sent that is being edited in the edit region. When the long press operation directed to the message 2 is detected, it is determined that the message referring instruction directed to the message 2 is received.

In step S1302, it is determined that the message marking instruction corresponding to the preset operation is the message referring instruction.

In step S1303, a reference mark is added between the message and the message that refers to the former message.

In this embodiment, the new message is set as the message that refers to the message 2. Thus, the reference mark is added between the message 2 and the new message.

In step S1304, the message that has been added and the reference mark is updated to the message display window.

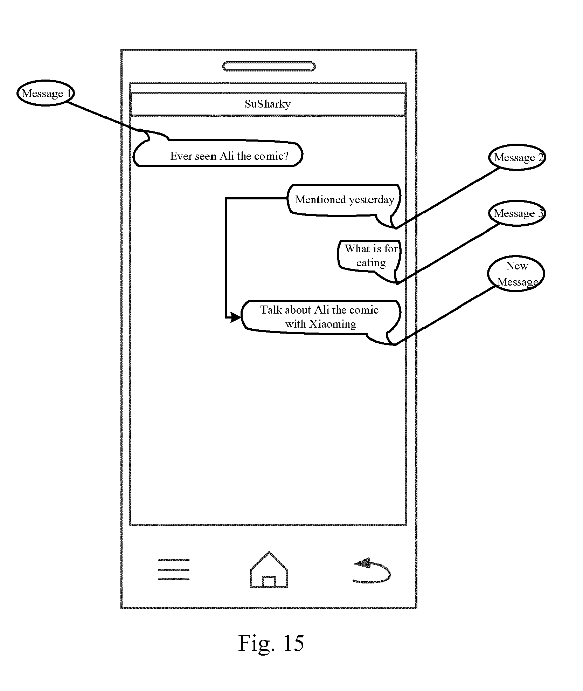

Fig.15 is a schematic view showing that after the long press operation directed to the message 2 shown in Fig.14 is detected, and the new message in the edit region shown in Fig.14 has been sent out, the reference mark between the message 2 and the new message is displayed in the display region of messages that have been sent out in the message display window.

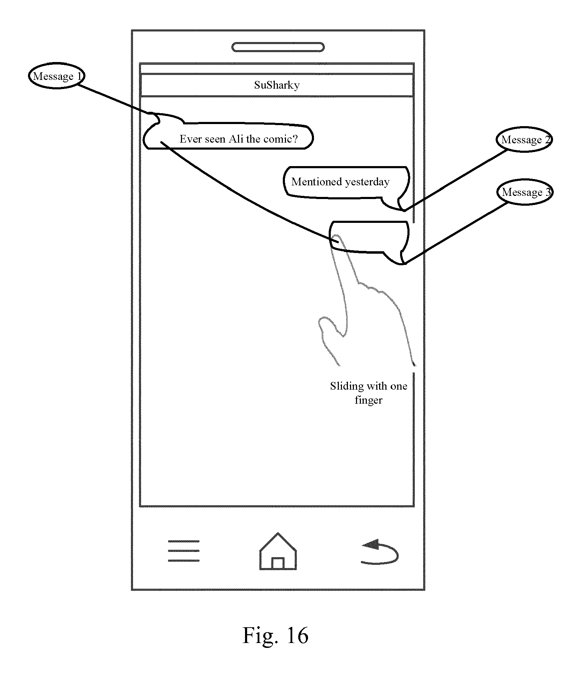

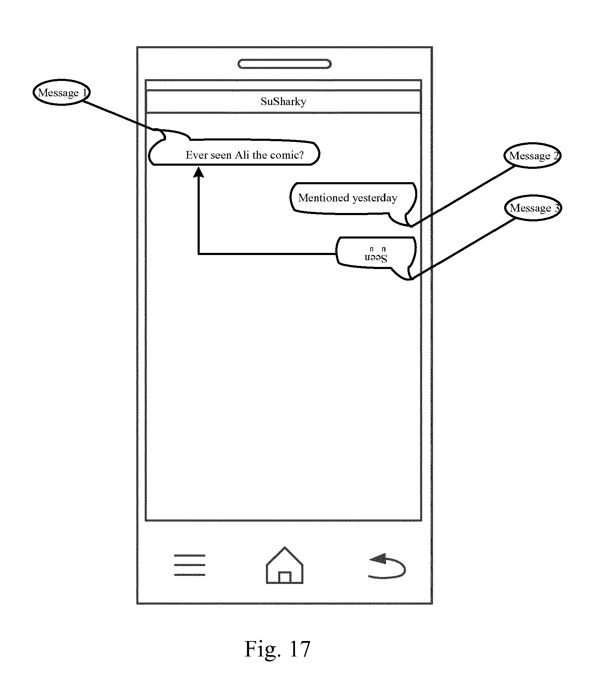

In addition, in an embodiment of the present disclosure, the preset operation performed on a message that has been sent out may also be detected, to display a reference mark in the message display window. For example, as shown in Fig.16, the preset operation may be a sliding operation started from the message 3, and finished at the message 1. Fig.17 is an effect view showing that after the sliding operation is detected, the reference mark is displayed between the message 3 and the message 1 in the message display window.

In the embodiment of the present disclosure, by displaying a reference mark between the messages, it is convenient for the user to understand the content of the message, and when the users are discussing several different subject matters at the same time, the correlation between the messages may be found out by the users through the reference mark. So it is easy to understand the content of the message, and the communication between the users is made fast and convenient.

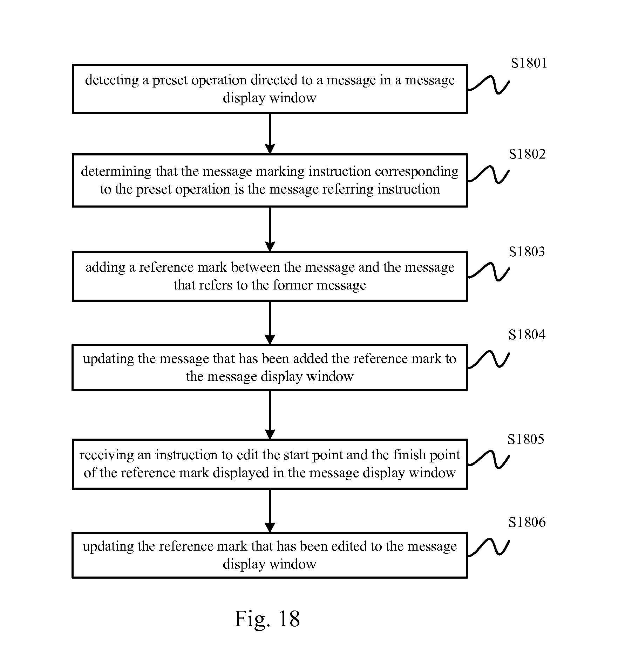

In an embodiment of the present disclosure, the reference mark may also be edited and deleted according to the needs of the users. Referring to Fig.18, the detailed processes included the following steps.

In step S1801, a preset operation directed to a message in a message display window is detected.

In step S1802, it is determined that the message marking instruction corresponding to the preset operation is the message referring instruction.

In step S1803, a reference mark is added between the message and the message that refers to the former message.

In step S1804, the message that has been added and the reference mark is updated to the message display window.

In step S1805, an instruction to edit the start point and the finish point of the reference mark displayed in the message display window is received.

In step S1806, the reference mark that has been edited is updated to the message display window.

In the embodiment of the present disclosure, by allowing an edit operation to the reference mark, it is convenient for the user to correlate the messages through the reference mark.

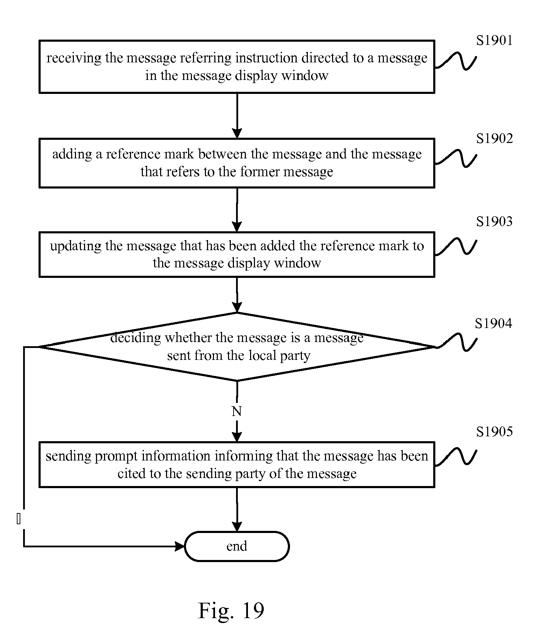

In an embodiment of the present disclosure, in the case that the message is not a message sent from the local party, and the message marking instruction is a message referring instruction, prompt information informing that the message has been cited may also be sent to the client of the message. Referring to Fig.19, the detailed processes include the following steps.

In step S1901, the message referring instruction directed to a message in the message display window is received.

In step S1902, a reference mark is added between the message and the message that refers to the former message.

In step S1903, the message that has been added and the reference mark is updated to the message display window.

In step S1904, it is decided whether the message is a message sent from the local party; if it is, the process is finished; and if it is not, step S1905 is performed.

In step S1905, prompt information informing that the message has been cited is sent to the sending party of the message.

In the embodiment of the present disclosure, by informing the sending party of the message that the message has been cited, the user may communicate fast and promptly, which improves user experience.

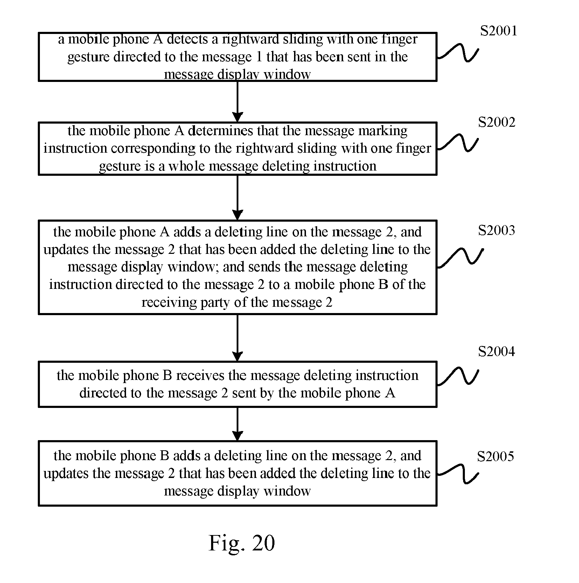

Hereinafter, by taking the case that the added deleting line is displayed in the message display windows of both the sending party and the receiving party for an example, the method for displaying messages according to the embodiment of the present disclosure will be described in detail. Referring to Fig.20, the detailed process include the following steps:

In step S2001, a mobile phone A detects a rightward sliding with one finger gesture directed to the message 1 that has been sent in the message display window.

In step S2002, the mobile phone A determines that the message marking instruction corresponding to the rightward sliding with one finger gesture is the whole message deleting instruction.

In step S2003, the mobile phone A adds a deleting line on the message 2, and updates the message 2 that has been added the deleting line to the message display window; and sends the message deleting instruction directed to the message 2 to a mobile phone B of the receiving party of the message 2.

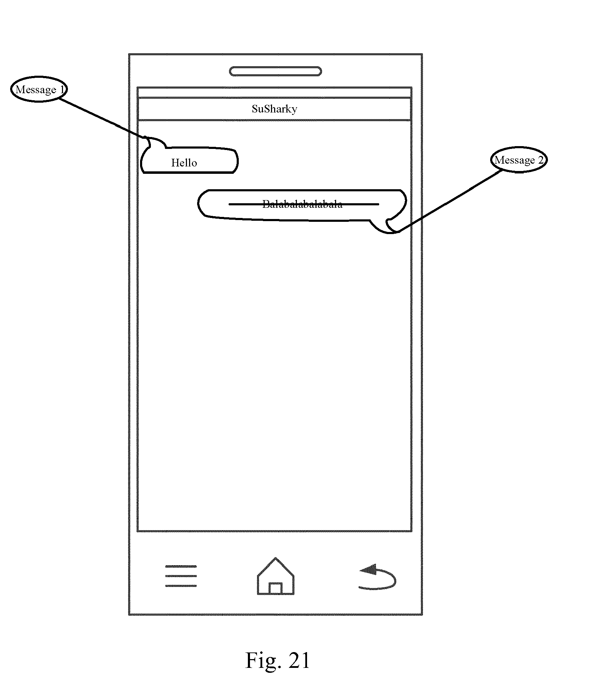

Fig.21 is an effect view showing that the mobile phone A updates the message 2 that has been added the deleting line to the message display window.

In step S2004, the mobile phone B receives the message deleting instruction directed to the message 2 sent by the mobile phone A.

In step S2005, the mobile phone B adds a deleting line on the message 2 according to the message deleting instruction, and updates the message 2 that has been added the deleting line to the message display window.

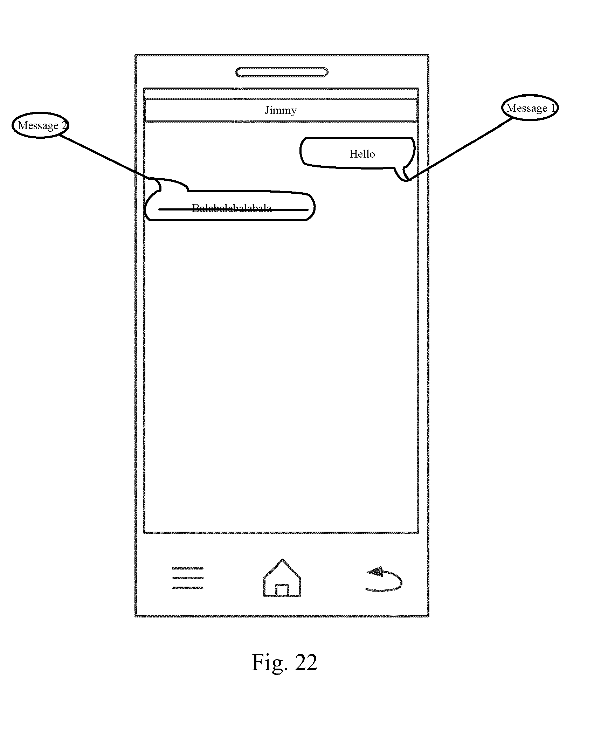

Fig.22 is an effect view showing that the mobile phone B updates the message 2 that has been added the deleting line to the message display window.

In the embodiment of the present disclosure, the mobile phone A and B may be synchronized in displaying the message.

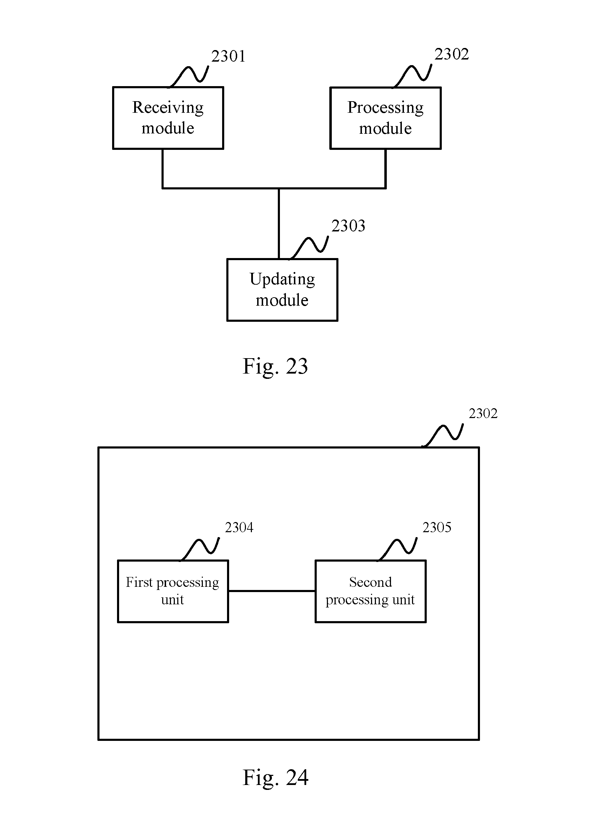

There is also provided an apparatus for displaying messages by an embodiment of the present disclosure. Referring to Fig.23, the apparatus includes:

a receiving module 2301, configured to receive a message marking instruction directed to a message in a message display window;

a processing module 2302, configured to perform a corresponding process on the message according to the message marking instruction.

an updating module 2303, configured to update the processed message to the message display window.

In an embodiment, the message marking instruction includes the message deleting instruction and the message referring instruction.

In an embodiment, the message deleting instruction includes: a whole message deleting instruction and a partial message deleting instruction.

Referring to Fig.24, in an embodiment, the processing module 2302 includes:

a first processing unit 2304, in the case that the message marking instruction is the whole message deleting instruction, the first processing unit 2304 is configured to delete the message; or to add a deleting line across the message;

a second processing unit 2305, in the case that the message marking instruction is the partial message deleting instruction, the second processing unit 2305 is configured to delete the selected characters in the message; or to add a deleting line across the selected characters in the message.

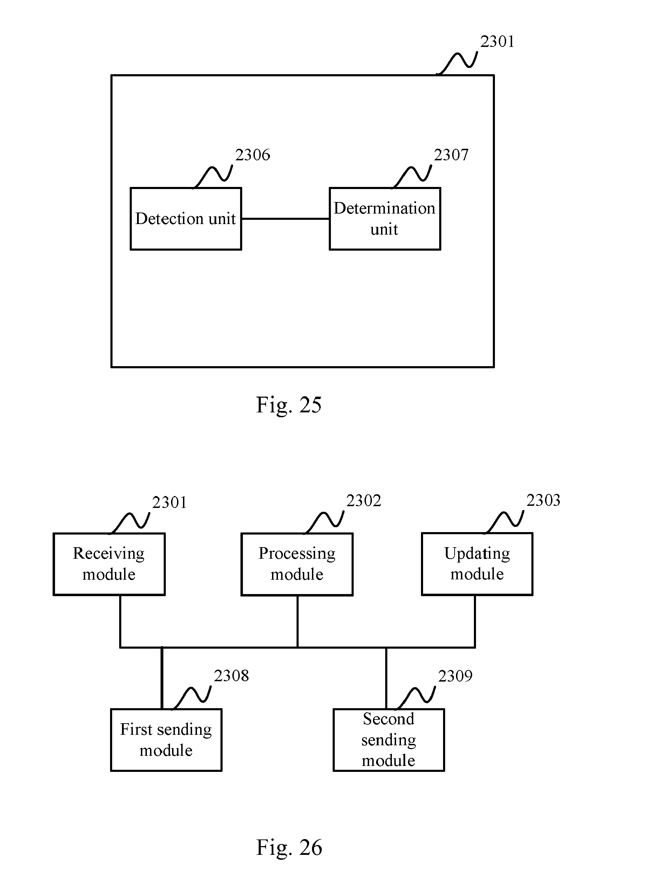

Referring to Fig.25, in an embodiment, the receiving module 2301 includes:

a detection unit 2306, configured to detect a preset operation directed to the message in the message display window;

a determination unit 2307, configured to determine the message marking instruction that corresponds to the preset operation according to the detected preset operation directed to the message in the message display window.

Referring to Fig.26, in an embodiment, the apparatus further includes:

a first sending module 2308, in the case that the message marking instruction is the message deleting instruction and the message is a message sent from a local party, the first sending module 2308 is configured to send the message marking instruction directed to the message to the receiving party of the message;

a second sending module 2309, in the case that the message marking instruction is the message referring instruction, the second sending module 2309 is configured to send the message marking instruction directed to the message to the receiving party and/or sending party of the message except for the local party.

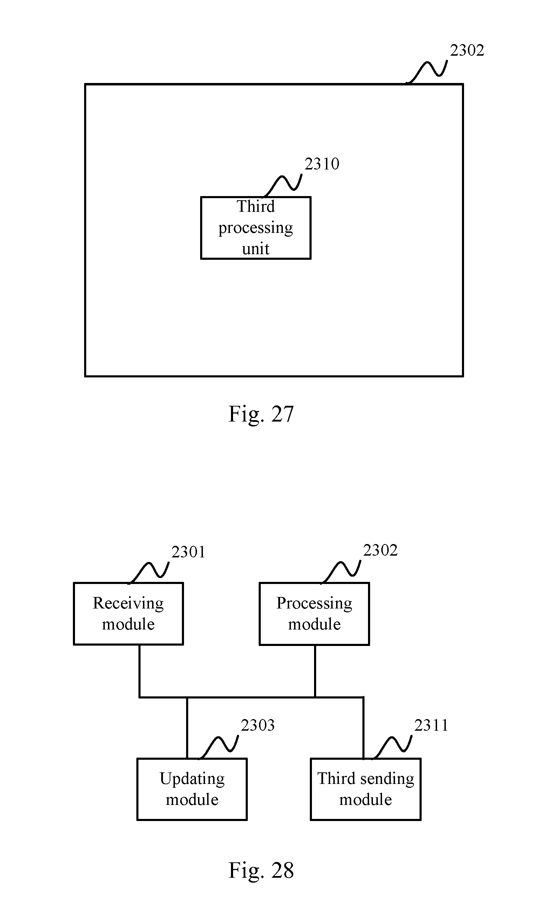

Referring to Fig.27, in an embodiment, the processing module 2302 includes:

a third processing unit 2310, in the case that the message marking instruction is the message referring instruction, the third processing unit 2310 is configured to add a reference mark between the message and the message that refers to the former message.

In an embodiment, an edit key is provided at the start point or the finish point of the reference mark, which is configured to modify or delete the reference mark.

Referring to Fig.28, in an embodiment, the apparatus further includes:

a third sending module 2311, in the case that the message is not a message sent form the local party and the message marking instruction is the message referring instruction, the third sending module 2311 is configured to send prompt information to the sending party of the message informing that the message has been referred.

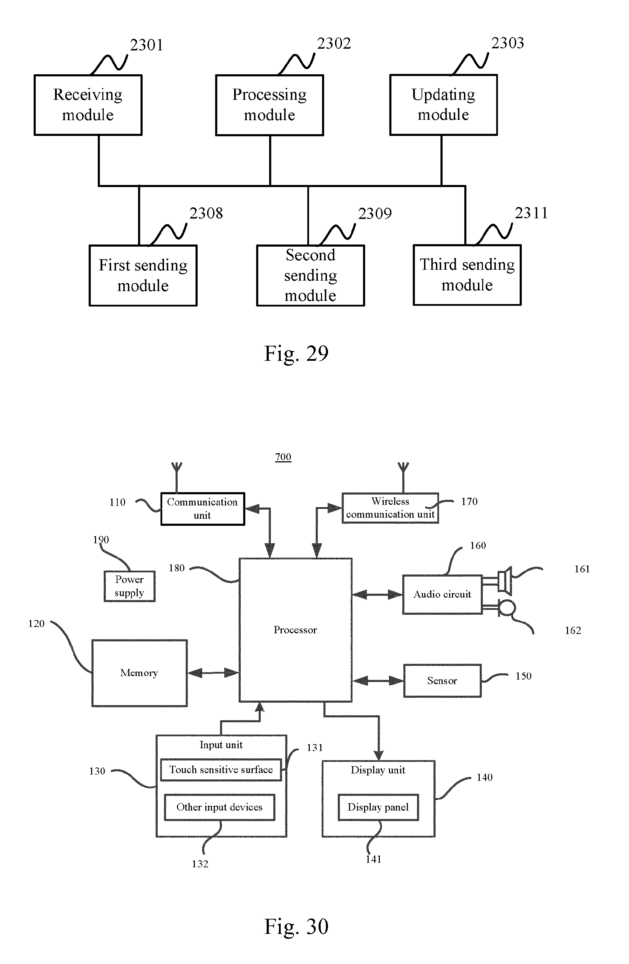

Fig.29 is a schematic view showing an apparatus for displaying messages including all the modules according to the embodiment, in which the functions of each module have been described in detail in the embodiment of the present disclosure, and will not be repeated here.

Fig.30 is a schematic structural view show a terminal device provided by an embodiment of the present disclosure. Referring to Fig.30, the terminal device may be configured to perform the method for displaying messages according to the above embodiments. The terminal device may be a mobile phone, a tablet pad, a wearable mobile terminal such as a smart watch, and the like.

The terminal device 700 may include a communication unit 110, a memory 120 including one or more computer-readable storage media, an input unit 130, a display unit 140, a sensor 150, an audio circuit 160, a wireless communication unit 170, a processor 180 including one or more processing cores, and a power supply 190 and other components. It should be appreciated by those skilled in the art that, the structure of the terminal device shown in Fig.30 does not constitute a limitation to the terminal device, and it may include more or less components than what is illustrated, or combine some of the components, or have different component arrangements.

The communication unit 110 may be configured to transmit and receive information, or to transmit and receive a signal during a procedure of calling. The communication unit 110 may be a network communication device such as a RF (Radio Frequency) circuit, a router, a modem, etc. In particular, when the communication unit 110 is a RF circuit, the communication unit 110 receives downlink information from a base station, and then transfers the information to one or more processors 180 to be processed. Also, the communication unit 110 transmits uplink data to the base station. Generally, the RF circuit as a communication unit includes but not limited to an antenna, at least one amplifier, a tuner, one or more oscillators, a subscriber identity module (SIM) card, a transceiver, a coupler, an LNA (Low Noise Amplifier), a duplexer, etc. Furthermore, the communication unit 110 may communicate with a network and other devices through wireless communication. The wireless communication may use any communication standards or protocols, including but not limited to GSM (Global System of Mobile communication), GPRS (General Packet Radio Service), CDMA (Code Division Multiple Access), WCDMA (Wideband Code Division Multiple Access), LTE (Long Term Evolution), e-mail, SMS (Short Messaging Service), etc. The memory 120 may be configured to store software programs and modules. The processor 180 performs various functional applications and data processing by running the software programs and modules stored in the memory 120. The memory 120 may mainly include a program storage area and a data storage area, wherein the program storage area may store operating systems, application programs required by at least one function (such as a function of sound playback, a function of image playback, etc.), etc.; and the data storage area may store data created during operation of the terminal device 700 (such as audio data, phone book, etc.), etc. In addition, the memory 120 may include a high-speed random access memory and may also include a non-volatile memory. For example, the memory 120 may include at least one disk storage device, a flash memory device, or other volatile solid-state memory devices. Accordingly, the memory 120 may also include a memory controller to provide access to the memory 120 performed by the processor 180 and the input unit 130.

The input unit 130 may be configured to receive input numbers or characters, and generate keyboard, mouse, joystick, optical or trackball input signals related to a user setting and the functional control. In an embodiment, the input unit 130 may include a touch sensitive surface 131 and other input device 132. The touch sensitive surface 131, also known as a touch screen or a track pad, may collect user's touch operations on or near the touch sensitive surface 131 (such as an operation performed by users using any suitable object or accessory such as a finger, a touch pen and the like on or near the touch sensitive surface 131), and drive a corresponding connected device according to a preset program. Optionally, the touch sensitive surface 131 may include two parts of a touch detection device and a touch controller. Here, the touch detection device detects a touching position of the user, detects a signal caused by the touch operation, and transmits the signal to the touch controller. The touch controller receives touch information from the touch detection device, transforms it into coordinates of the touch point, and sends the coordinates to the processor 180. The touch controller may also receive a command from the processor 180 and execute the command. In addition, the touch sensitive surface 131 may be realized in various types, such as resistive type, capacitive type, infrared type and surface acoustic wave type, etc. In addition to the touch sensitive surface 131, the input unit 130 may also include other input device 132. In an embodiment, the other input device 132 may include but not limited to one or more of a physical keyboard, functional keys (such as volume control keys, switch buttons, etc.), a trackball, a mouse, and a joystick.

The display unit 140 may be configured to display information input by the user or information provided for the user and various graphical user interfaces of the terminal device 700. These graphical user interfaces may consist of graphics, texts, icons, videos, and any combination thereof. The display unit 140 may include a display panel 141, and optionally, the display panel 141 may be configured with LCD (Liquid Crystal Display), OLED (Organic Light-Emitting Diode), etc. Further, the touch sensitive surface 131 may cover the display panel 141. When a touch operation on or near the touch sensitive surface 131 is detected by the touch sensitive surface 131, the touch operation is sent to the processor 180 to determine the type of touch event, and corresponding visual output will be provided on the display panel 141 by the processor 180 according to the type of touch event. Although in Fig,30, the touch sensitive surface 131 and the display panel 141 are two separate components to realize input and output functions, in some embodiments, the touch sensitive surface 131 and the display panel 141 may be integrated to realize input and output functions.

The terminal device 700 may further include at least one kind of sensor 150, such as a light sensor, a motion sensor and other sensors. In an embodiment, the light sensor may include an ambient light sensor and a proximity sensor. Here, the ambient light sensor may adjust the brightness of the display panel 141 according to the brightness of the ambient light. The proximity sensor may turn off the display panel 141 and/or backlight when the terminal device 700 moves close to ear. As one kind of the motion sensor, a gravity acceleration sensor may detect the acceleration in each direction (typically on three axes), and may detect the magnitude and the direction of gravity when it is stationary, which may be used in the applications for recognizing the attitudes of the mobile phone (such as horizontal and vertical screen switching, related games, attitude calibration of a magnetometer), functions related to vibration recognizing (such as a pedometer, clicking), etc. The terminal device 700 may also be equipped with other sensors such as a gyroscope, a barometer, a hygrometer, a thermometer, an infrared sensor, etc., which will not be redundantly described herein.

The audio circuit 160, a speaker 161 and a microphone 162 may provide an audio interface between the user and the terminal device 700. The audio circuit 160 may transform received audio data into electrical signals which are transmitted to the speaker 161 and transformed into sound signals to be output by the speaker 161. On the other hand, the microphone 162 transforms collected sound signals into electrical signals which are received and transformed into audio data by the audio circuit 160. After being output to the processor 180 to be processed, the audio data is transmitted to, for example, another terminal device via the RF circuit 110, or output to the memory 120 for further processing. The audio circuit 160 may also include an ear bud jack to allow a communication between an external earphone and the terminal device 700.

In order to achieve wireless communication, the terminal device may be equipped with a wireless communication unit 170 which may be a WiFi (Wireless Fidelity) module. WiFi is a short-range wireless transmission technology. The terminal device 700 allows the user to send and receive emails, browse webpages and access streaming media, etc. through the wireless communication unit 170, which provides the user with a wireless broadband Internet access. Although Fig.30 shows the wireless communication unit 170, it should be appreciated that, the wireless communication unit 170 is not a necessary component of the terminal device 700, and may be omitted as desired.

The processor 180 is a control center of the terminal device 700 that connects various parts of the entire mobile phone through various interfaces and circuits, performs various functions and data processing of the terminal device 700 by running or executing the software programs and/or modules stored in the memory 120 and by invoking data stored in the memory 120, so as to monitor the overall mobile phone. Optionally, the processor 180 may include one or more processing cores. The processor 180 may be integrated with an application processor that mainly processes operating systems, user interfaces and application programs, and a modem processor that mainly processes the wireless communication. It should be appreciated that, the above modem processor may not be integrated into the processor 180.

The terminal device 700 may also include a power supply 190 (such as a battery) to supply power to each component. The power supply may be logically connected to the processor 180 through a power supply management system, so as to achieve the functions such as charge, discharge and power consumption managements, etc. through the power supply management system. The power supply 190 may also include one or more components of a DC or AC power, a recharge system, a power failure detection circuit, a power converter or an inverter, a power status indicator, etc.

Although not shown, the terminal device 700 may also include a camera, a Bluetooth module, etc., which are not redundantly described herein. In the present embodiment, the terminal device further includes a memory and one or more programs stored in the memory, and the terminal device is configured to execute the one or more programs by one or more processors, the one or more programs containing instructions to perform the following operations:

receiving a message marking instruction directed to a message in a message display window;

performing a corresponding process on the message according to the message marking instruction;

updating the processed message to the message display window.

In an embodiment, the memory also includes instructions to perform the following operations: in the case that the message marking instruction is the whole message deleting instruction, the processing the message according to the message marking instruction includes: deleting the message; or adding a deleting line across the message;

in the case that the message marking instruction is a partial message deleting instruction, the processing the message according to the message marking instruction includes: deleting selected characters in the message; or adding a deleting line across the selected characters in the message.

In an embodiment, the memory also includes instructions to perform the following operations: the receiving a message marking instruction directed to a message in a message display window includes:

detecting a preset operation directed to the message in the message display window;

determining the message marking instruction that corresponds to the preset operation according to the detected preset operation directed to the message in the message display window.

In an embodiment, the memory also includes instructions to perform the following operations: in the case that the message marking instruction is the message deleting instruction, and the message is a message sent from a local party, sending the message marking instruction directed to the message to the receiving party of the message;

in the case that the message marking instruction is the message referring instruction, sending the message marking instruction directed to the message to the receiving party and/or sending party of the message except for the local party.

In an embodiment, the memory also includes instructions to perform the following operations: in the case that the message marking instruction is the message referring instruction, the performing a corresponding process on the message according to the message marking instruction includes:

adding a reference mark between the message and the message that refers to the former message.

In an embodiment, the memory also includes instructions to perform the following operations: in the case that the message is not a message sent form the local party, and the message marking instruction is the message referring instruction, sending prompt information to the sending party of the message informing that the message has been referred.

Consequently, through the method, apparatus and terminal device according to the embodiments of the present disclosure, by performing the corresponding process on the message in the message display window according to the message marking instruction and updating the processed message to the message display window, the message in the message display window may be marked, and many more functions may be provided for the user by allowing the message to be marked. For example, through the method according to the embodiment of the present disclosure, when the user has sent out an erroneous message, he does not need to explain the erroneous message, but only needs to mark the erroneous message, which improves the speed and efficiency for communication between the users.

It should be appreciated by those skilled in the art that, the embodiments of the present disclosure may be provided as a method, system or computer program product. Therefore, the present disclosure may take the form of an entirely hardware embodiment, an entirely software embodiment, or a combination of software and hardware embodiments. Moreover, the present disclosure may take a form of a computer program product executed on one or more computer available storage medium (including, but not limited to, a disk storage, and an optical memory, etc.) containing computer available program codes.

The present disclosure is described with reference to the flowchart and/or block diagram showing the method, device (system), and a computer product according to the embodiments of the present disclosure. It should be appreciated that each process and/or block of the flowchart and/or block diagram and combinations of the processes and/or blocks in the flowchart and/or block diagram may be implemented by computer program instructions. These computer program instructions may be provided to a central processor of a general purpose computer, a special purpose computer, an embedded processor or other programmable data processing apparatus to produce a machine, such that a means is produced that implements the functions specified in the one or more processes of the flow chart and/or the one or more blocks in the block diagram through the instructions executed by the central processor of the computer or other programmable data processing apparatus.

These computer program instructions may also be stored in a computer-readable memory that can direct a computer or other programmable data processing apparatus to function in a particular manner, such that the instructions stored in the computer-readable memory produce a manufactured article including instruction means that implements the functions specified in the one or more processes of the flow chart and/or the one or more blocks in the block diagram.

These computer program instructions may also be loaded onto a computer or other programmable data processing apparatus, making the implementation of a series of steps on the computer or other programmable apparatus to implement the processes by the computer, such that the instructions executed on the computer or other programmable data processing apparatus may provide steps that implement the functions specified in the one or more processes of the flow chart and/or the one or more blocks in the block diagram.

## Claims

1. A computer-implemented method for displaying messages, **characterized in that**, the method comprises:
receiving (S101) a message marking instruction directed to a message in a message display window;
processing (S102) the message according to the message marking instruction; and
updating (S103) the processed message to the message display window.

2. The method according to claim 1, wherein, the message marking instruction comprises:
a message deleting instruction and a message referring instruction.

3. The method according to claim 2, wherein, the message deleting instruction comprises:
a whole message deleting instruction and a partial message deleting instruction.

4. The method according to claim 3, wherein, in case that the message marking instruction is a whole message deleting instruction, the processing the message according to the message marking instruction comprises: deleting the message; or adding a deleting line across the message;
in case that the message marking instruction is a partial message deleting instruction, the processing the message according to the message marking instruction comprises: deleting selected characters in the message; or adding a deleting line across the selected characters in the message.

5. The method according to claim 2, wherein, the receiving a message marking instruction directed to a message in a message display window comprises:
detecting (S301) a preset operation directed to the message in the message display window;
determining (S302) the message marking instruction that corresponds to the preset operation according to the detected preset operation directed to the message in the message display window.

6. The method according to claim 5, wherein, in case that the message marking instruction is the message deleting instruction (S204), and the message is a message sent from a local party, the method further comprises: sending the message marking instruction directed to the message to a receiving party of the message;
in case that the message marking instruction is the message referring instruction (S204), the method further comprises: sending the message marking instruction directed to the message to the receiving party and/or a sending party of the message except for the local party.

7. The method according to claim 3, wherein, in case that the message marking instruction is the message referring instruction, the processing the message according to the message marking instruction comprises:
adding a reference mark between the message and the message that refers to the former message.

8. The method according to claim 7, wherein, an edit key is provided at a start point or a finish point of the reference mark, the edit key being configured to modify or delete the reference mark.

9. The method according to claim 7, wherein, in case that the message is not a message sent form the local party, and the message marking instruction is the message referring instruction, the method further comprises:
sending prompt information to a sending party of the message informing that the message has been referred.

10. An apparatus for displaying messages, **characterized in that**, the apparatus comprises:
a receiving module (2301), configured to receive a message marking instruction directed to a message in a message display window;
a processing module (2302), configured to process the message according to the message marking instruction; and
an updating module (2303), configured to update the processed message to the message display window.

11. The apparatus according to claim 10, wherein, the message marking instruction comprises a message deleting instruction and a message referring instruction.

12. The apparatus according to claim 11, wherein, the message deleting instruction comprises: a whole message deleting instruction and a partial message deleting instruction.

13. The apparatus according to claim 12, wherein, the processing module (2302) comprises:
a first processing unit (2304), in case that the message marking instruction is the whole message deleting instruction, the first processing unit is configured to delete the message or to add a deleting line across the message; and
a second processing unit (2305), in case that the message marking instruction is the partial message deleting instruction, the second processing unit is configured to delete selected characters in the message or to add a deleting line across the selected characters in the message.

14. The apparatus according to claim 11, wherein, the receiving module (2301) comprises:
a detection unit (2306), configured to detect a preset operation directed to the message in the message display window; and
a determination unit (2307), configured to determine the message marking instruction that corresponds to the preset operation according to the detected preset operation directed to the message in the message display window.

15. The apparatus according to claim 14, wherein, the apparatus comprises:
a first sending module (2308), in case that the message marking instruction is the message deleting instruction and the message is a message sent from a local party, the first sending module is configured to send the message marking instruction directed to the message to a receiving party of the message; and
a second sending module (2309), in case that the message marking instruction is the message referring instruction, the second sending module is configured to send the message marking instruction directed to the message to the receiving party and/or a sending party of the message except for the local party.

16. The apparatus according to claim 12, wherein, the processing module (2302) comprises:
a third processing unit (2310), in case that the message marking instruction is the message referring instruction, the third processing unit is configured to add a reference mark between the message and a message that refers to the former message.

17. The apparatus according to claim 16, wherein, an edit key is provided at a start point or a finish point of the reference mark, the edit key being configured to modify or delete the reference mark.

18. The apparatus according to claim 16, wherein, the apparatus further comprises:
a third sending module (2311), in case that the message is not a message sent form the local party and the message marking instruction is the message referring instruction, the third sending module being configured to send prompt information to a sending party of the message informing that the message has been referred.

19. A program product having stored therein instructions that, when executed by one or more processors of a terminal, causes the terminal to perform:
receiving (S101) a message marking instruction directed to a message in a message display window;
processing (S102) the message according to the message marking instruction; and
updating (S103) the processed message to the message display window.

20. A computer program which when executing on a processor, performs the method of any one of claims 1 to 9.
